# EUROPEAN PATENT APPLICATION

(11) **EP 4 753 270 A1**
(43) Date of publication of application: **03.06.2026**
(21) Application number: 23951581.0
(22) Date of filing: 04.09.2023
(51) Int. Cl.: H04N 21/443, H04N 21/442, H04N 21/4363, H04N 21/436

(54) **WIRELESS TRANSMISSION DEVICE AND WIRELESS DISPLAY SYSTEM**

(71) Applicant: LG Electronics Inc., Yeongdeungpo-gu Seoul 07336 (KR)
(72) Inventor: SONG, Dae Sub, Seoul 06772 (KR)
(74) Representative: Schott, Jakob Valentin
(86) International application number: PCT/KR2023/013170
(87) International publication number: WO 2025/053294

(57) **Abstract**

A wireless display system according to the embodiment of the present disclosure may comprise: an Audio/Video (A/V) receiving device configured to: acquire sensing data, and transmit the acquired sensing data to an A/V transmitting device through a first reception interface; and the A/V transmitting device configured to: receive the sensing data from the first reception interface through a first transmission interface, determine whether a user's motion has occurred based on the sensing data, and when it is determined that the user's motion has occurred, transmit a power-on signal to the first reception interface through the first transmission interface.

## Description

### [Technical Field]

The present disclosure relates to a wireless display system for wirelessly transmitting and receiving A/V data.

### [Background Art]

A digital TV service using a wired or wireless communication network is becoming common. The digital TV service can provide various services that could not be provided in the existing analog broadcasting service.

For example, IPTV (Internet Protocol Television), a type of digital TV service, and smart TV service provide bi-directionality that allows users to actively select the type of program to watch and the viewing time. IPTV and smart TV services may provide various additional services, such as Internet search, home shopping, and online games, based on this interactive nature.

Recently, TV service is provided through a wireless system that an A/V transmitting device transmits a compressed audio/video (A/V) signal to an A/V receiving device through a wireless connection, and the A/V receiving device restores and outputs the compressed A/V signal.

A sensor exists in the A/V receiving device to recognize whether there is a person in front of the A/V receiving device equipped with a display, but a separate processing device should be added in the A/V receiving device to process/determine a lot of sensing data that is updated in real time.

Since the main processing unit that processes video/audio data exists in the A/V transmitting device, the conventional method of processing/judging sensing data in the A/V receiving device cannot utilize the main processing unit that already exists in the A/V transmitting device, there is a waste of cost in adding a separate main processing unit to the A/V receiving device.

### [Disclosure]

### [Technical Problem]

The purpose of the present disclosure is to control the power of the A/V transmitting device and the A/V receiving device at low power/low cost by utilizing a processing device existing in the A/V transmitting device without a separate main processing device in the A/V receiving device.

The purpose of the present disclosure is to transmit/ receive low-capacity data such as sensing data and power-on signal using an inexpensive BLE communication circuit, and efficiently transmit data by transmitting/receiving A/V data using an RF transmitting/receiving interface.

### [Technical Solution]

A wireless display system according to the embodiment of the present disclosure may comprise: an Audio/Video (A/V) receiving device configured to: acquire sensing data, and transmit the acquired sensing data to an A/V transmitting device through a first reception interface; and the A/V transmitting device configured to: receive the sensing data from the first reception interface through a first transmission interface, determine whether a user's motion has occurred based on the sensing data, and when it is determined that the user's motion has occurred, transmit a power-on signal to the first reception interface through the first transmission interface.

A method of operating a wireless display system including an A/V (Audio/Video) transmitting device and an A/V receiving device according to the embodiment of the present disclosure may comprise: acquiring, by the A/V receiving device, sensing data; transmitting, by the A/V receiving device, acquired sensing data to the A/V transmitting device through a first reception interface; receiving, by the A/V transmitting device, the sensing data from the first reception interface through a first transmission interface; determining, by the A/V transmitting device, whether a user's motion has occurred based on the sensing data; and transmitting, the A/V transmitting device, a power-on signal to the first reception interface through the first transmission interface when it is determined that the user's motion has occurred.

### [Advantageous Effects]

According to an embodiment of the present disclosure, there is no need to separately add a processing device that determine whether a user's motion has occurred using raw data about the real-time distance measured by a motion sensor to the A/V receiving device.

Accordingly, whether the user's motion occurs can be determined at low cost and low power, and power synchronization between the A/V transmitting device and the A/V receiving device can be performed.

The wireless display system can be automatically turned on by the user simply by going near the wireless display system without any additional input.

In addition, the present disclosure transmits/receives low-capacity data such as sensing data and power-on signal using an inexpensive BLE communication circuit, and transmits/receives A/V data using an RF transmission/reception interface, so data transmission can be performed efficiently.

### [Description of Drawings]

FIGS. 1 and 2 are diagrams for explaining the configuration of a display system according to an embodiment of the present disclosure.
FIG. 3 is a block diagram illustrating the configuration of a remote control device according to an embodiment of the present disclosure.
FIG. 4A is a perspective view of an A/V transmitting device.
FIG. 4B is a diagram illustrating the internal structure of an A/V transmitting device.
FIG. 4C is a diagram illustrating an RF reception interface of the A/V receiving device.
FIG. 5 is a ladder diagram for illustrating a method of operating a wireless display system according to an embodiment of the present disclosure.
FIG. 6 is a diagram illustrating a process that an A/V transmitting device transmits a power-on signal to the A/V receiving device when the user's presence is recognized or the user's motion occurs in front of the A/V receiving device according to an embodiment of the present disclosure.
FIG. 7 is a diagram illustrating the process of synchronizing power between the RF transmission interface and the RF reception interface when the user's presence is recognized or the user's motion occurs in front of the A/V receiving device according to an embodiment of the present disclosure.

### [Best Mode]

A video/audio (hereinafter referred to as A/V) transmitting device according to an embodiment of the present disclosure is an intelligent device in which a computer support function is added to a broadcast reception function, for example, and an Internet function is added while being faithful to the broadcast reception function and a handwriting type input device, a touch screen, or a space remote controller, etc., can be equipped with a more user-friendly interface.

In addition, by being connected to the Internet and a computer by supporting a wired or wireless Internet function, it is possible to perform functions such as e-mail, web browsing, banking, or game. A standardized universal OS can be used for these various functions.

Accordingly, since various applications can be freely added or deleted in the A/V transmitting device described in this disclosure, for example, on a general-purpose OS kernel, various user-friendly functions can be performed.

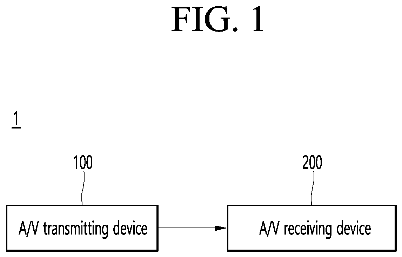

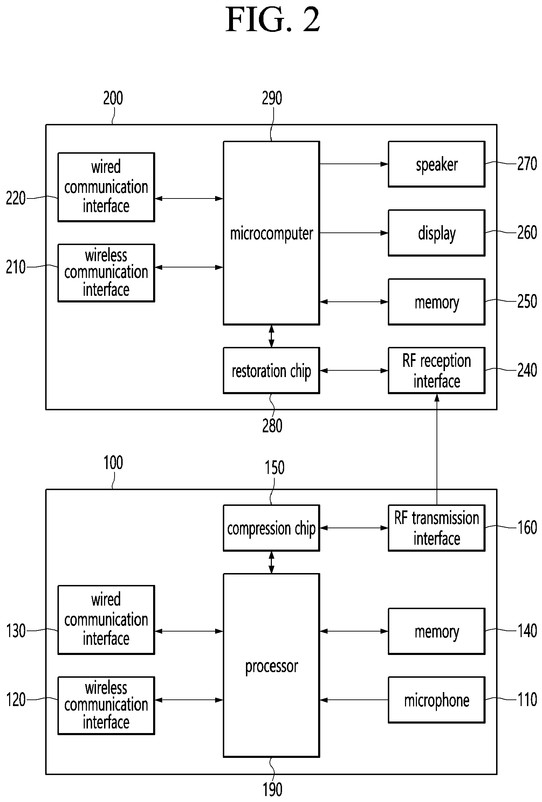

FIGS. 1 and 2 are diagrams for explaining the configuration of a wireless display system according to an embodiment of the present disclosure.

Referring to FIG. 1, a wireless display system 1 according to an embodiment of the present disclosure includes an A/V transmitting device 100 and an A/V receiving device 200.

The wireless display system 1 may be a system that the A/V transmitting device 100 wirelessly transmits A/V data to the A/V receiving device 200, and the A/V receiving device 200 outputs the A/V data.

The A/V transmitting device 100 may be a device capable of encoding video and audio and wirelessly transmitting the encoded content video and audio.

The A/V transmitting device 100 may be a set-top box.

The A/V transmitting device 100 may be connected to an external device such as a set-top box or a USB memory. The A/V transmitting device 100 may transmit a video signal or an audio signal received from a connected external device to the A/V receiving device 200.

The A/V receiving device 200 may be a display device capable of wirelessly receiving encoded video and audio and decoding the received video and audio.

The A/V transmitting device 100 and the A/V receiving device 200 may constitute a video wall display system.

In a video wall, having a display with a thin bezel plays an important role in visualizing content video. For the thin bezel of the display, it is efficient to have only the component that can play the minimum role, and to perform the circuit or component for the main functions in a separate device.

The A/V transmitting device 100 may determine the type of content video input from the outside, and determine a compression rate of the content video based on the determined type. The compression rate of content video may be defined as the ratio of the size of video data before encoding to the size of video data after encoding.

The type of content video may include a still video type, a general video type, and a game video type.

The A/V transmitting device 100 may compress the content video according to the determined compression rate and wirelessly transmit the compressed content video to the A/V receiving device 200.

The A/V receiving device 200 may restore the compressed content video received from the A/V transmitting device 100 and display the restored content video on a display.

FIG. 2 is a block diagram illustrating detailed configurations of the A/V transmitting device 100 and the A/V receiving device 200.

Referring to FIG. 2, the A/V transmitting device 100 may include a microphone 110, a wireless communication interface 120, a wired communication interface 130, a memory 140, a compression chip 150, and an RF transmission interface 160 and the processor 190.

The microphone 110 may receive an audio signal and transmit it to the processor 190.

The microphone 110 may receive a voice uttered by a user.

The wireless communication interface 120 may include one or more of a Wi-Fi module and a Bluetooth module.

The Wi-Fi module may perform wireless communication with an external device or the A/V receiving device 200 through the Wi-Fi standard.

The Bluetooth module may perform wireless communication through a Bluetooth Low Energy (BLE) standard.

The Bluetooth module may perform wireless communication with an external device such as a remote controller or the A/V receiving device 200 through Bluetooth Low Energy (BLE) standards.

The wireless communication interface 120 may include a tuner that receives broadcast signal.

The wired communication interface 130 may be an interface for wired connection with an external device. The wired communication interface 130 may include a plurality of High Definition Multimedia Interface (HDMI) terminals or Universal Serial Bus (USB) ports.

The wired communication interface 130 may receive a video signal or an audio signal from an external device.

The memory 140 may store program for signal processing and control, and may store signal-processed video, audio, or data signal.

The memory 140 may perform a function for temporarily storing video, audio, or data signal input from the outside, and may store information about a predetermined image through a channel storage function.

The compression chip 150 may compress a video signal or an audio signal input from the outside and transmit the compressed signal to the RF transmission interface 160.

The compression chip 150 may include an encoder for compressing a video signal or an audio signal.

The RF transmission interface 160 may transmit the A/V signal to the RF reception interface 240 of the A/V receiving device 200 through radio frequency (RF) communication.

The RF transmission interface 160 may include one or more antennas.

The RF transmission interface 160 may transmit the compressed A/V signal in digital form to the RF reception interface 240.

The RF transmission interface 160 may transmit A/V signal to the RF reception interface 240 through one or more channels.

The processor 190 may control the overall operation of the A/V transmitting device 100. The processor 190 may be referred to as a Main System on Chip (Main SoC).

The processor 190 may also include a compression chip 150.

The A/V receiving device 200 may include a wireless communication interface 210, a wired communication interface 220, an RF reception interface 240, a memory 250, a display 260, a speaker 270, and a restoration chip 280 and a mi-com(microcomputer) 290.

The wireless communication interface 210 may include a Wi-Fi module, a Bluetooth module, and an IR module.

The Wi-Fi module may perform wireless communication through the Wi-Fi standard.

The Wi-Fi module may perform wireless communication with an external device or the A/V transmitting device 100 through Wi-Fi standards.

The Bluetooth module may perform wireless communication through a Bluetooth Low Energy (BLE) standard.

The Bluetooth module may perform wireless communication with an external device such as a remote control or the A/V transmitting device 100 through Bluetooth Low Energy (BLE) standard.

The IR module may receive a signal from the remote controller 300 to be described later through IR (Infrared) communication.

The wired communication interface 220 may be an interface for wired connection with an external device. The wired communication interface 220 may include a plurality of High Definition Multimedia Interface (HDMI) terminals or Universal Serial Bus (USB) ports.

The wired communication interface 220 may receive a video signal or an audio signal from an external device.

The RF reception interface 240 may receive the compressed A/V signal from the RF transmission interface 160.

The RF reception interface 240 may include a plurality of antennas. The RF reception interface 240 may be disposed below the display 260.

The RF reception interface 240 may include a first antenna module and a second antenna module. Each of the first antenna module and the second antenna module may include a plurality of antennas.

The RF reception interface 240 may receive the digital compressed A/V signal from the RF transmission interface 160 and transfer the received A/V signal to the restoration chip 280.

The memory 250 may store program for signal processing and control, and may store signal-processed video, audio, or data signal.

The display 260 may display an image signal received from the microcomputer 290.

The display 260 may display an image signal according to driving of a timing controller (not shown).

The restoration chip 280 may restore the compressed A/V signal received by the RF reception interface 240. To this end, the restoration chip 280 may include a decoder.

The microcomputer 290 may control overall operations of the A/V receiving device 200.

The microcomputer 290 may output the restored video signal through the display 260 and output the restored audio signal through the speaker 270.

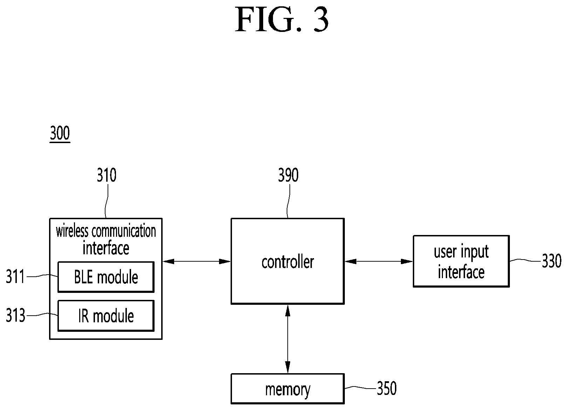

FIG. 3 is a block diagram illustrating the configuration of a remote control device according to an embodiment of the present disclosure.

Referring to FIG. 3, the remote control device 300 may include a wireless communication interface 310, a user input interface 330, a memory 350 and a controller 390.

The wireless communication interface 310 may be an interface for performing wireless communication with the A/V transmitting device 100 or the A/V receiving device 200.

The wireless communication interface 310 may include a Bluetooth Low Energy (BLE) module 311 and an InfraRed (IR) module 313.

The BLE module 311 may transmit a signal for controlling the operation of the A/V transmitting device 100 to the A/V transmitting device 100.

The BLE module 311 may transmit a signal triggering a pairing operation of the A/V transmitting device 100 to the A/V transmitting device 100.

The user input interface 330 may include a keypad, buttons, a touch pad, or a touch screen.

The user input interface 330 may generate a control command for controlling the operation of the A/V transmitting device 100 or the A/V receiving device 200 according to a user's manipulation command.

If the user input interface 330 includes a hard key button, the user can operate the hard key by pushing the hard key button.

The user input interface 330 may include various types of input means that the user can manipulate, such as a scroll key or a jog key.

The memory 350 may store programs for operating the controller 390 and may temporarily store input/output data.

The controller 390 controls operations related to application programs and generally the overall operation of the remote control device 300.

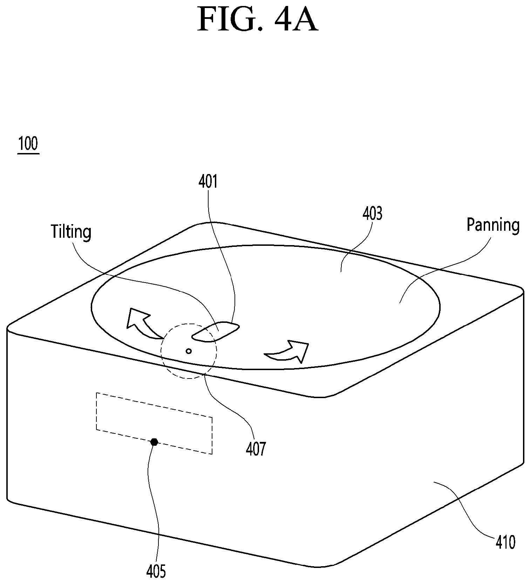

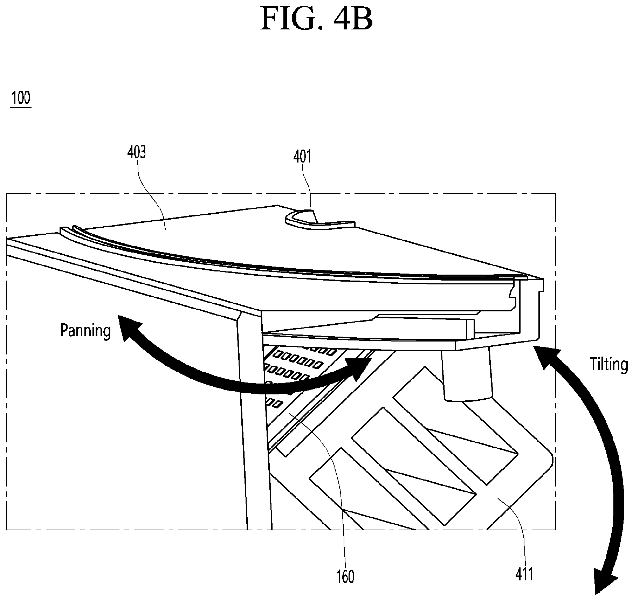

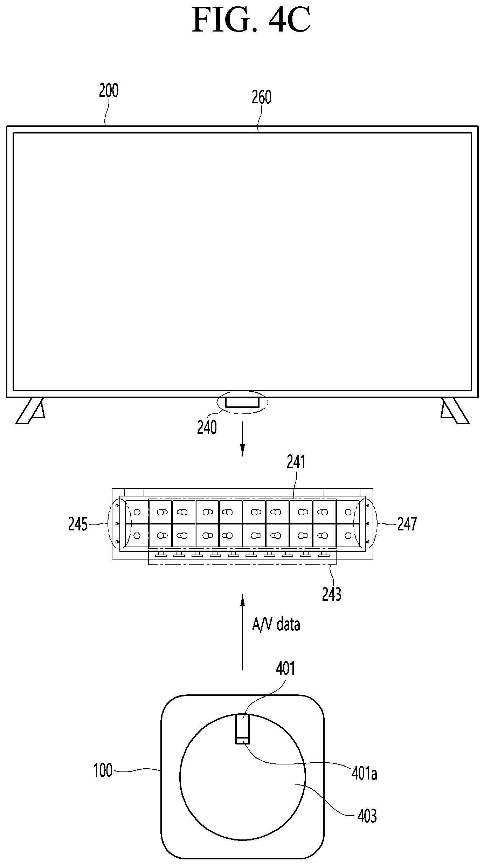

FIG. 4A is a perspective view of an A/V transmitting device, FIG. 4B is a diagram illustrating an internal structure of the A/V transmitting device, and FIG. 4C is a diagram illustrating an RF reception interface of the A/V receiving device.

Referring to FIG. 4A, the A/V transmitting device 100 may include a box 410, a sliding button accommodating portion 401 accommodating a sliding button 401a, a dial 403, a power status display unit 405, and a communication quality status display unit 407.

Components of the A/V transmitting device 100 described in FIG. 2 may be included inside the box 410. The box 410 may be a housing including components of the A/V transmitting device 100 described in FIG. 2.

The sliding button 401a may be a mean for controlling the vertical direction of the RF transmission interface 160 shown in FIG. 4B (tilting control).

The dial 403 may be a mean for controlling the horizontal rotation direction (panning control) of the RF transmission interface 160 shown in FIG. 4B.

The power status display unit 405 may indicate the on or off state of the A/V transmitting device 100. The power status indicator 405 may include one or more LEDs.

The communication quality status display unit 407 may indicate a communication quality status between the A/V transmitting device 100 and the A/V receiving device 200. The communication quality status display unit 407 may include one or more LEDs.

The communication quality status display unit 407 may not be included in the box 410 as an optional configuration.

The processor 190 may receive a pointing correction input through the sliding button 401a or the dial 403.

The processor 190 may tilt the RF transmission interface 160 including the transmission antennas in a vertical direction according to an input for moving the sliding button 401a.

The RF transmission interface 160 may include a substrate and a plurality of transmission antennas. The RF transmission interface 160 may be provided on top of a heat sink 611 discharging heat generated inside the box 410.

The processor 190 may rotate or pan the RF transmission interface 160 including transmission antennas in a left and right direction according to an input for moving the dial 403.

The user may perform an antenna pointing correction operation by manipulating the sliding button 401a or the dial 403 while viewing the antenna guide used to adjust the direction of the transmission antenna.

According to another embodiment of the present disclosure, a motor (not shown) for automatically controlling tilting of the RF transmission interface 160 according to information on the determined vertical correction angle and a motor (not shown) for automatically controlling the panning of the RF transmission interface 160 may be further provided in the box 410 according to information on the determined horizontal correction angle.

In this case, even without a separate guide, the RF transmission interface 160 may be set to have an optimal arrangement structure, and user convenience may be maximized.

Referring to FIG. 4C, an RF reception interface 240 may be provided at the bottom of the display 260 of the A/V receiving device 200.

The RF reception interface 240 includes a plurality of reception antennas and receives A/V data from the A/V transmitting device 100.

The RF reception interface 240 may include a front antenna group 241 facing the front, a bottom face antenna group 243 facing the bottom face, a left face antenna group 245 facing the left face, and a right face antenna group facing the right face 247.

The number of antennas may be decreased in the order of the front antenna group 241, the bottom antenna group 243, the left antenna group 245, and the right antenna group 247.

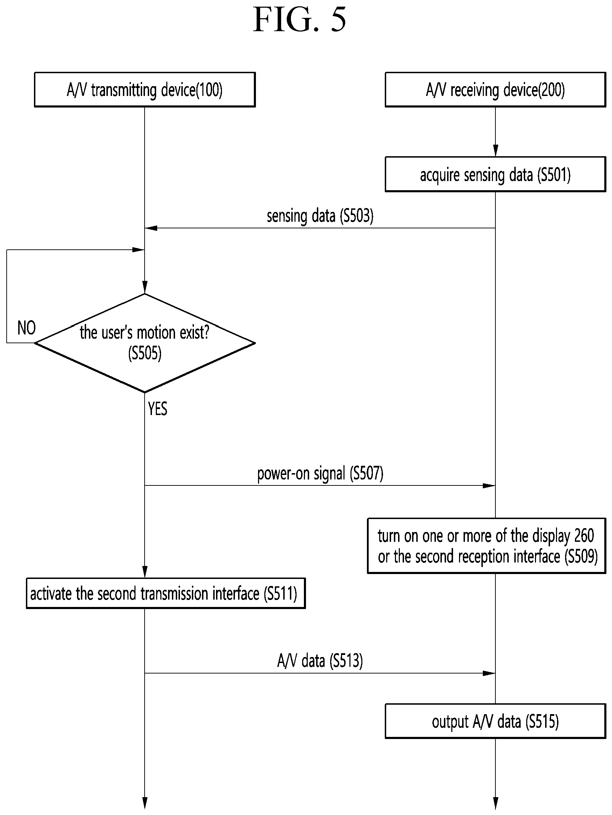

FIG. 5 is a ladder diagram for illustrating a method of operating a wireless display system according to an embodiment of the present disclosure.

Hereinafter, it is assumed that the power of the A/V transmitting device 100 and the power of the A/V receiving device 200 are each turned off.

That the A/V transmitting device 100 is turned off may indicate that the RF transmission interface 160 (a second transmission interface to be described later) of the A/V transmitting device 100 is not activated.

That the RF transmission interface 160 is not activated may mean that power is not supplied to the RF transmission interface 160 and thus power is not being supplied to the RF transmission antennas.

When the A/V receiving device 200 is turned off, the display 260 and the RF reception interface 240 may not be activated.

That the display 260 is not activated may mean that the screen of the display 260 is turned off.

A state in which the RF reception interface 240 is not activated may mean that power is not supplied to the RF reception interface 240 and thus power is not supplied to the RF reception antennas.

Referring to FIG. 5, the microcomputer 290 of the A/V receiving device 200 may acquire sensing data (S501).

The A/V receiving device 200 may be equipped with a motion sensor that detects the presence of a user or the user's motion.

The motion sensor may be a Time Of Flight (TOF) sensor. A TOF sensor can output light and measure the time the light is reflected and input. TOF can measure the distance between an object and the TOF sensor using the measured time.

The TOF sensor can measure the distances in each 3 x 3 area of 3-dimensional space.

The microcomputer 290 can obtain the distance measured by the TOF sensor as sensing data.

The motion sensor may be placed at the bottom of the display 260.

In another embodiment, the motion sensor may be provided separately from the A/V receiving device 200. In this case, the A/V receiving device 200 may receive the distance measured by the motion sensor.

The microcomputer 290 of the A/V receiving device 200 may transmit the acquired sensing data to the first transmission interface of the A/V transmitting device 100 through the first reception interface (S503).

The first reception interface may be the wireless communication interface 210 of the A/V receiving device 200 shown in FIG. 2. Specifically, the first reception interface may include a Bluetooth Low Energy (BLE) circuit provided in the wireless communication interface 210.

The frequency band used in the first reception interface may be 2.4GHz.

The first transmission interface of the A/V transmitting device 100 may be the wireless communication interface 120 of the A/V transmitting device 100 shown in FIG. 2. Specifically, the first transmission interface may include a Bluetooth Low Energy (BLE) circuit provided in the wireless communication interface 120.

The first transmission interface and the first reception interface may exchange small-capacity data. Each of the first transmission interface and the first reception interface may include an RF chip optimized for low power.

The first reception interface may transmit sensing data to the first transmission interface.

The processor 190 of the A/V transmitting device 100 may determine whether the user's motion exists based on the received sensing data (S505).

The processor 190 may determine whether user motion exists based on the received sensing data.

The processor 190 may compare the first distance included in the first sensing data received at the first time point with the second distance included in the second sensing data received at the second time point following the first time point.

If the difference between the first distance and the second distance is greater than or equal to a preset difference, the processor 190 may determine that the user's motion exists.

The presence of the user's motion may indicate that the user exists in front of the A/V receiving device 200.

When it is determined that the user's motion exists, the processor 190 of the A/V transmitting device 100 transmits, to the first reception interface of the A/V receiving device 200, a power-on signal to turn on the A/V receiving device 200 through the first transmission interface (S507).

When it is determined that the user's motion has occurred, the processor 190 transmits, to the first reception interface of the A/V receiving device 200, a power-on signal to activate the display 260 and the second reception interface provided in the A/V receiving device 200.

The second reception interface may be the RF reception interface 240 including the RF receive antennas shown in FIG. 2.

The second reception interface may receive A/V data from the second transmission interface using a frequency band of 60 GHz.

The microcomputer 290 of the A/V receiving device 200 may turn on one or more of the display 260 or the second reception interface according to the power-on signal received from the first transmission interface (S509).

The microcomputer 290 may turn on the screen of the display 260 according to a power command received from the first transmission interface.

The microcomputer 290 may simultaneously activate the second reception interface. That is, the microcomputer 290 may supply power to one or more antennas among a plurality of reception antennas provided in the second reception interface.

Accordingly, the second reception interface may wait to receive A/V data from the second transmission interface of the A/V transmitting device 100.

Meanwhile, the processor 190 of the A/V transmitting device 100 may activate the second transmission interface when it is determined that the user's motion exists (S511).

When it is determined that a user's motion exists in the front of the A/V receiving device 200, the processor 190 may supply power to one or more antennas among a plurality of transmission antennas provided in the second transmission interface.

That is, the processor 190 of the A/V transmitting device 100 may synchronize the power of the second transmission interface and the second reception interface when there is a user's motion.

The processor 190 of the A/V transmitting device 100 transmits A/V data to the second reception interface of the A/V receiving device 200 through the activated second transmission interface (S513).

The processor 190 transmits one or more of audio data or video data compressed through the compression chip 150 to a second reception interface through a second transmission interface.

The microcomputer 290 of the A/V receiving device 200 outputs the received A/V data (S515).

The microcomputer 290 can output audio data through the speaker 270 and video data through the display 260.

As such, according to an embodiment of the present disclosure, there is no need to add a separate processing device to the A/V receiving device (200) to determine the occurrence of user motion using raw data on real-time distance measured by motion sensor.

Accordingly, whether the user's motion occurs may be determined at low cost and low power, and power synchronization between the A/V transmitting device 100 and the A/V receiving device 200 may be performed.

Additionally, the wireless display system may be automatically turned on by the user simply by going near the wireless display system without any additional input.

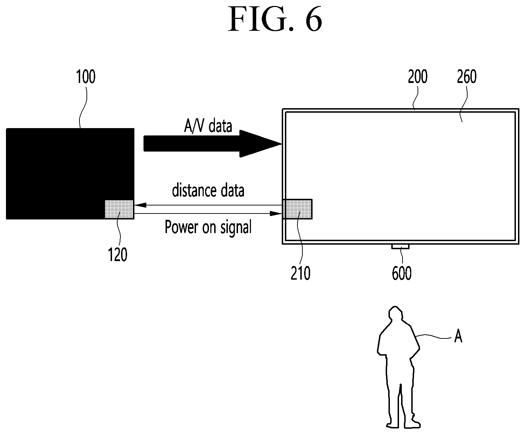

FIG. 6 is a diagram illustrating a process that an A/V transmitting device transmits a power-on signal to the A/V receiving device when the user's presence is recognized or the user's motion occurs in front of the A/V receiving device according to an embodiment of the present disclosure.

Referring to FIG. 6, the A/V receiving device 200 may be provided with a motion sensor 600 at the bottom of the display 260. The motion sensor 600 may periodically output light and receive reflected light for the output light.

The motion sensor 600 may measure distance data between the user A and the motion sensor 600 based on the received reflected light.

The A/V receiving device 200 may transmit the measured distance data to the wireless communication interface 210 of the A/V transmitting device 100 through the wireless communication interface 210.

The A/V transmitting device 100 may determine whether user A exists or whether user A's motion has occurred based on the received distance data.

The A/V transmitting device 100 may generate a power-on signal when the presence of the user (A) is detected or when the user's (A) motion occurs.

The A/V transmitting device 100 may transmit a power-on signal to the wireless communication interface 210 of the A/V receiving device 200 through the wireless communication interface 120.

The A/V transmitting device 100 may activate the second transmission interface according to the generation of a power-on signal.

The A/V receiving device 200 may turn on the screen of the display 260 according to the received power-on signal. The A/V receiving device 200 may activate the second reception interface according to a power-on signal.

After power synchronization, the A/V transmitting device 100 transmits A/V data to the second reception interface of the A/V receiving device 200 through the second transmission interface.

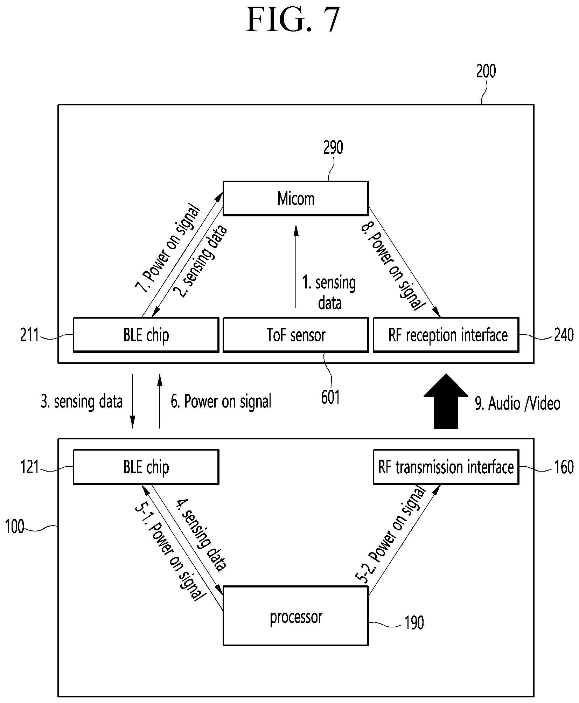

FIG. 7 is a diagram illustrating the process of synchronizing power between the RF transmission interface and the RF reception interface when the user's presence is recognized or the user's motion occurs in front of the A/V receiving device according to an embodiment of the present disclosure.

Referring to FIG. 7, the ToF sensor 601 may be an example of the motion sensor 600.

The ToF sensor 601 may operate even if the power of each display 260 or RF reception interface 240 of the A/V receiving device 200 is turned off.

The ToF sensor 601 may periodically output light to the outside and measure distance data between an object and the ToF sensor 601 by receiving reflected light.

The ToF sensor 601 may obtain measured distance data as sensing data.
1. The ToF sensor 601 may transfer sensing data to the microcomputer 290.
2. The microcomputer 290 may transmit the received sensing data to the BLE chip 211 provided in the wireless communication interface 210.
3. The BLE chip 211 may transmit sensing data to the BLE chip 121 provided in the wireless communication interface 120 provided in the A/V transmitting device 100.
4. The BLE chip 121 provided in the wireless communication interface 120 may transmit the received sensing data to the processor 190. The processor 190 may determine whether the user exists or whether the user's motion has occurred based on the received sensing data.
5-1. When the processor 190 recognizes the presence of a user or determines that a user's motion has occurred, the processor 190 may generate a power-on signal and transmit the generated power-on signal to the BLE chip 121. The power-on signal may be a signal for turning on one or more of the display 260 or the RF reception interface 240 of the A/V receiving device 200.
5-2. The processor 190 may activate the RF transmission interface 160 according to the generation of a power-on signal.
6. The BLE chip 121 may transmit a power-on signal to the BLE chip 211 of the A/V receiving device 200.
7. The BLE chip 211 may transfer a power-on signal to the microcomputer 290.
8. The microcomputer 290 may transfer a power-on signal to the RF reception interface 240 to activate the RF reception interface 240.
9. The RF transmission interface 160 may transmit A/V data to the RF reception interface 240.

As such, according to an embodiment of the present disclosure, a BLE chip can be used as a means for transmitting and receiving sensing data and a means for transmitting and receiving a power-on signal.

This is because power is wasted when low-capacity data, such as sensing data and power-on signals, are transmitted and received through the RF transmission interface 160 and RF reception interface 240, which handle high-capacity data.

In other words, power waste can be prevented as the BLE chip is used as a means of transmitting and receiving sensing data and power-on signal.

Additionally, according to an embodiment of the present disclosure, unlike the existing case, a processing device for processing sensing data in the A/V receiving device 200 is not required, thereby reducing costs.

According to an embodiment of the present disclosure, the above-described method can be implemented as processor-readable code on a program-recorded medium. Examples of media that the processor can read include ROM, RAM, CD-ROM, magnetic tape, floppy disk, and optical data storage devices.

## Claims

1. A wireless display system, comprising:
an Audio/Video (A/V) receiving device configured to:
acquire sensing data, and
transmit the acquired sensing data to an A/V transmitting device through a first reception interface; and
the A/V transmitting device configured to:
receive the sensing data from the first reception interface through a first transmission interface,
determine whether a user's motion has occurred based on the sensing data, and
when it is determined that the user's motion has occurred, transmit a power-on signal to the first reception interface through the first transmission interface.

2. The wireless display system of claim 1, wherein the A/V receiving device is further configured to turn on a screen of a display according to the power-on signal received through the first reception interface.

3. The wireless display system of claim 2, wherein the A/V receiving device is further configured to activate a second reception interface including a plurality of reception antennas according to the power-on signal.

4. The wireless display system of claim 3, wherein the A/V transmitting device is further configured to activate a second transmission interface including a plurality of transmission antennas according to the power-on signal.

5. The wireless display system of claim 4, wherein the second transmission interface transmits the A/V data to the second reception interface.

6. The wireless display system of claim 4, wherein each of the first transmission interface and the first reception interface includes a circuit using the Bluetooth Low Energy (BLE) standard.

7. The wireless display system of claim 6, wherein the first transmission interface and the first reception interface communicate using a frequency band of 2.4 GHz, and
the second transmission interface and the second reception interface communicate using a frequency band of 60 GHz.

8. The wireless display system of claim 1, wherein the A/V receiving device further includes a Time of Flight (ToF) sensor configured to:
measure distance data between the user and the A/V receiving device, and obtain the measured distance data as the sensing data.

9. The wireless display system of claim 8, wherein the A/V transmitting device is further configured to:
compare a first distance included in first distance data received at a first time point with a second distance included in second distance data received at a second time point following the first time point, and
when the difference between the first distance and the second distance is more than a preset difference, determine that the user's motion has occurred.

10. The wireless display system of claim 1, wherein the A/V receiving device includes:
a display,
a motion sensor configured to acquire the sensing data,
the first reception interface configured to transmit the sensing data to the first transmission interface,
a second reception interface comprising a plurality of reception antennas and configured to receive an A/V data from the second transmission interface, and
a microcomputer configured to turn on a screen of a display and activate the second reception interface according to the power-on signal received from the first transmission interface.

11. The wireless display system of claim 10, wherein the A/V transmitting device includes:
the first transmission interface configured to receive the sensing data from the first reception interface,
a second transmission interface comprising a plurality of transmission antennas and configured to transmit the A/V data, and
a processor configured to determine whether the user's motion has occurred based on the sensing data,
wherein processor is further configured to generate the power-on signal when it is determined that the user's motion has occurred.

12. A method of operating a wireless display system including an A/V (Audio/Video) transmitting device and an A/V receiving device, comprising:
acquiring, by the A/V receiving device, sensing data;
transmitting, by the A/V receiving device, acquired sensing data to the A/V transmitting device through a first reception interface;
receiving, by the A/V transmitting device, the sensing data from the first reception interface through a first transmission interface;
determining, by the A/V transmitting device, whether a user's motion has occurred based on the sensing data; and
transmitting, the A/V transmitting device, a power-on signal to the first reception interface through the first transmission interface when it is determined that the user's motion has occurred.

13. The method of claim 12, further comprising:
turning on, by the A/V receiving device, a screen of a display of the A/V receiving device according to the power-on signal received through the first reception interface.

14. The method of claim 13, further comprising:
activating, by the A/V receiving device, a second reception interface including a plurality of reception antennas according to the power-on signal.

15. The method of claim 14, further comprising:
activating, by the A/V transmitting device, a second transmission interface including a plurality of transmission antennas according to the power-on signal.
